# EUROPÄISCHE PATENTSCHRIFT

(11) **EP 1 567 888 B1**
(45) Veröffentlichungstag und Bekanntmachung des Hinweises auf die Patenterteilung: **02.08.2006**
(21) Anmeldenummer: 03811754.5
(22) Anmeldetag: 11.11.2003
(51) Int. Cl.: G01S 13/93, G01S 17/93, G01S 13/86, G01S 17/02

(54) **VERFAHREN ZUR ERFASSUNG DER VORAUSLIEGENDEN UMGEBUNG EINES STRASSENFAHRZEUGS MITTELS EINES UMGEBUNGSERFASSUNGSSYSTEMS**
METHOD FOR DETECTING THE ENVIRONMENT AHEAD OF A ROAD VEHICLE BY MEANS OF AN ENVIRONMENT DETECTION SYSTEM
PROCEDE DE DETECTION DE L'ENVIRONNEMENT A L'AVANT D'UN VEHICULE ROUTIER AU MOYEN D'UN SYSTEME DE DETECTION DE L'ENVIRONNEMENT

(30) Priorität: 28.11.2002 DE 10255797
(43) Veröffentlichungstag der Anmeldung: 31.08.2005
(73) Patentinhaber: DaimlerChrysler AG, 70567 Stuttgart (DE)
(72) Erfinder: EGGERS, Helmuth, 89077 Ulm (DE); KURZ, Gerhard, 73240 Wendlingen (DE); SEEKIRCHER, Jürgen, 73760 Ostfildern (DE); WOHLGEMUTH, Thomas, 72631 Aichtal (DE)
(86) Internationale Anmeldenummer: PCT/EP2003/012572
(87) Internationale Veröffentlichungsnummer: WO 2004/049000

(56) Entgegenhaltungen:
- EP-A- 0 544 468
- EP-A- 1 265 078
- WO-A-02/082201
- US-A- 5 714 928

## Beschreibung

Die Erfindung betrifft ein Verfahren zur Erfassung der vorausliegenden Umgebung eines Straßenfahrzeugs mittels eines Umgebungserfassungssystems.

Zur Unterstützung des Fahrers werden in Fahrzeugen Fahrerassistenzsysteme eingesetzt. Unter anderem kommen dabei umgebungserfassende Systeme zum Einsatz. Derartige Systeme dienen dazu, den Fahrer vor Hindernissen und anderen Gefahrenquellen zu warnen und somit Verkehrsunfälle zu vermeiden. Hindernisse werden dabei vor allem mittels optischer Sensoren erkannt. Dazu sind am Straßenfahrzeug CCD-Sensoren und Infrarot Sensoren angebracht, um sowohl bei Tag als auch bei Nachtfahrten Umgebungsdaten aufzunehmen. Die aufgenommenen Umgebungsdaten werden mittels einer mit der Sensorik in Verbindung stehenden Rechnereinheit zu einem Bild verarbeitet und dem Fahrer anschließend beispielsweise auf einem Display dargestellt. Es ist aber auch denkbar die Bilddaten einer Auswertung zu unterziehen, um z.B. Objekte darin zu erkennen.

In der US-Patentschrift mit der Patentnummer 6 201 236 B1 wird ein optoelektronisches System für die Objektdetektion innerhalb eines eingegrenzten Überwachungsbereichs beschrieben. Das System umfasst zu diesem Zweck mehrere LED-Sender und Photoempfänger, welche paarweise an einem Straßenfahrzeug angebracht sind. Die LED-Sender werden gepulst betrieben und leuchten dabei den Überwachungsbereich aus. Im Überwachungsbereich befindliche Objekte werden sodann durch das an den Objekten reflektierte Licht mittels der Photoelemente detektiert. Die LED-Sender und Empfänger werden mit einer Steuereinheit betrieben, wobei das detektierte Signal derart ausgewertet wird, dass zwischen dem von Objekten reflektierten Licht und dem Umgebungslicht unterschieden werden kann. Die mittels der Steuereinheit durchgeführte Auswertung erfolgt selektiv, um die Grenzen des Überwachungsbereichs an die Umgebungsbedingungen anpassen zu können. Beispielsweise schrumpft der Überwachungsbereich, wenn enge und kurvenreiche Straßen passiert werden. Die Größe des Überwachungsbereichs hängt auch vom Fahrzeugtyp (LKW, PKW, ...) ab, da sich mit diesem der Tote-Winkel und somit der zu überwachende Bereich ändert. Die Größe des Überwachungsbereichs ist derart festgelegt, dass das System andere Fahrzeuge, welche sich im Toten-Winkel des Fahrzeugs befinden und sich in einer benachbarten Fahrspur bewegen, detektieren kann. Der Überwachungsbereich ist zudem begrenzt, so dass zwar benachbarte Fahrspuren aber keine Objekte wie z.B. Verkehrszeichen, Zäune, Mauern, etc. detektiert werden.

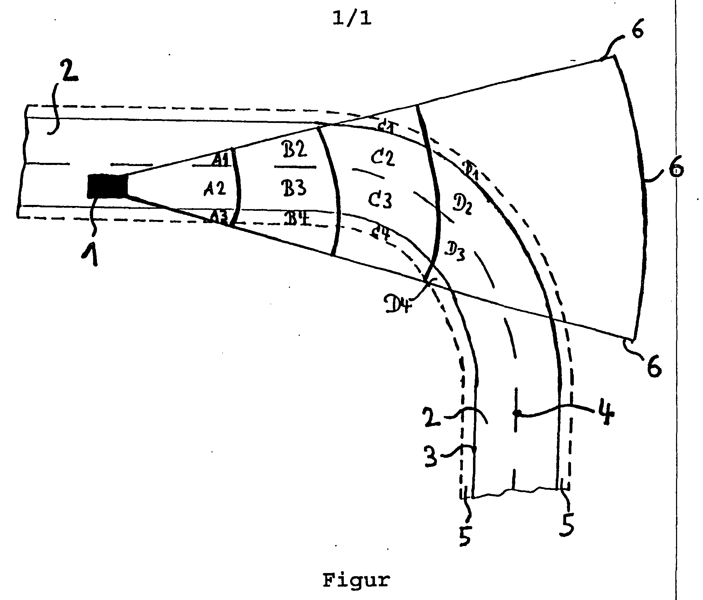

In der UK-Patentanmeldung mit der Veröffentlichungsnummer GB 2352859 A wird ein Überwachungssystem beschrieben, welches zur Überwachung eines 3D-Raums dient und wenigstens zwei Kameras umfasst. Innerhalb eines 3D-Raums werden ein oder mehrere zu überwachende Volumen definiert, hierbei handelt es sich beispielsweise um Gefahrenräume oder abgesperrte Gebiete. Dadurch dass zwei oder mehr Kameras eingesetzt werden, kann das System erfassen, ob ein Objekt in das zu überwachende Volumen eindringt. Das zu überwachende Volumen wird durch den Benutzer mittels einer Zeichnung definiert. Die Zeichnung enthält dabei die Konturen um ein Objekt in mindestens zwei Ansichten. Wobei die Ansichten derart gewählt sind, dass diese der Kameraanordnung entsprechen und mittels der Kameraanordnung ein Objekt von beiden Kameras gleichzeitig erfasst wird. Sind die Kameras für zwei sich im Sichtfeld bewegende Objekte koplanar angeordnet, so werden mit den sich schneidenden optischen Strahlen der Kameras insgesamt vier begrenzte Überwachungsbereiche beschrieben. Die Überwachungsbereiche ändern sich dabei in ihrer Größe mit der Bewegung der Objekte.

Auf der Internetseite der Toyota Motor Corporation (www.toyota.co.jp/Showroom/All toyota lineup/LandCruiserCygnu s/safety/index.html) wird ein System zur Unterstützung des Sehvermögens des Fahrers bei Nachtfahrten vorgestellt. Dabei wird mittels einer im Nahinfraroten empfindlichen Kamera die Umgebung erfasst und dem Fahrer auf einem Head-Up-Dispaly angezeigt. Das System zeigt bei Abblendlicht den dem Lichtkegel des Fahrzeugs vorausliegenden, schwer erkennbaren Straßenverlauf sowie sich in der Umgebung befindliche Personen, Fahrzeuge und Hindernisse an. Dem Lichtkegel des Abblendlichts schließt sich dazu ein mit dem Nachtsichtsystem erkennbarer Bereich an. Der erkennbare Bereich liegt idealerweise bei etwa 100m und reicht maximal bis etwa 150m.

Das System dient auch als Assistent für die Fernsicht, insbesondere in Situationen bei denen man nicht mit Fernlicht fahren kann. Das System stellt bei Fernlichtfahrt dem Fahrer vorausliegende Informationen bereit, durch Abbildung in direkter Sicht schwer erkennbarer Gegenstände. Durch die Verwendung von Nahinfrarotstrahlen kann das System den Straßenzustand, auf die Straße gefallene Gegenstände und andere Straßeninformationen anzeigen. Dem Lichtkegel des Fernlichts, welches mit einer Reichweite von in etwa 180m angegeben wird, schließt sich dazu der mit dem Nachtsichtsystem abbildbare Bereich an. Der abbildbare Bereich liegt idealerweise bei ungefähr 200m und wird maximal mit ca. 250m angegeben.

Beim Betrieb eines derartigen Systems wirkt sich unter realen Bedingungen eine derart große Menge auszuwertender Daten sehr nachteilig aus. Dementsprechend sind die Anforderungen an die Leistungsfähigkeit der Hardware zum Erreichen der Echtzeitfähigkeit sehr hoch. Deshalb wird bisher sehr aufwendige und zudem sehr teure Spezial-Hardware bei umgebungserfassenden Systemen eingesetzt.

Der Erfindung liegt daher die Aufgabe zu Grunde, ein Verfahren zu schaffen, mit dem unter Verwendung eines Umgebungserfassungssystems die vorausliegende Umgebung eines Straßenfahrzeug erfasst und dort befindliche Objekte erkannt werden können, wobei eine Echtzeitfähigkeit des Systems durch eine einfache Datenverarbeitung realisiert wird.

Die Aufgabe wird gemäß der Erfindung durch ein Verfahren mit den Merkmalen des Patentanspruch 1 gelöst. Vorteilhafte Ausgestaltungen und Weiterbildungen der Erfindung werden in den Unteransprüchen aufgezeigt.

Gemäß der Erfindung wird ein Verfahren zur Erfassung der vorausliegenden Umgebung eines Straßenfahrzeugs unter Verwendung eines Umgebungserfassungssystems eingesetzt. Wobei es sich bei dem Umgebungserfassungssystem insbesondere um ein Infrarot-Nachtsichtsystem handeln kann. Zur Erfassung von Umgebungsdaten umfasst das System wenigstens einen Umgebungssensor. Dabei kann es sich beispielsweise um ein Stereokamerasystem, einen Radarsensor in Verbindung mit einer Kamera, eine Kombination von IR-Laser und einer Kamera oder einen Ultraschallsensor in Verbindung mit einer Kamera handeln. Mittels Sensordatenverarbeitung werden innerhalb der von dem Umgebungssensor erfassten Umgebungsdaten Objekte erkannt. Wobei der Erkennungsbereich in welchem die Objekte erkannt werden derart gestaltet ist, dass dieser einem Teilbereich des von der Kamera erfassten Bereichs entspricht. In einer erfinderischen Weise wird der Erkennungsbereich in mehrere Teilbereiche unterteilt. Aufgrund der Unterteilung in solche Erkennungsteilbereiche können Umgebungsdaten sodann einer spezifischen Auswertung unterzogen werden. Beispielsweise erfolgt die Auswertung in einem nahen Bereich mit einer höheren Priorität als in einem entfernteren Bereich. Auch ist es denkbar für verschiedene Erkennungsbereiche unterschiedliche Rechenleistungen zur Verfügung zu stellen, z.B. aufwendige, mehrstufige Algorithmen.

In einer weiteren erfinderischen Weise wird vor der Unterteilung des Erkennungsbereichs in mehrere Teilbereiche im Erkennungsbereich eine Fahrspurerkennung durchgeführt. Zur Ermittlung des Verlaufs der Fahrspur hat es sich bewährt Bildverarbeitungsverfahren einzusetzen. Es ist aber auch denkbar, die Fahrspur aufgrund der Informationen eines Navigationssystems zu ermitteln. Die Fahrspur kann direkt in die Bilder der Umgebungserfassung eingezeichnet und dem Fahrer dargestellt werden.

Mit der Erfindung wird es erst möglich eine echtzeitfähige vorausschauende Umgebungserfassung unter Verwendung von Standard-Hardware durchzuführen. Durch eine spezifische Auswertung innerhalb einzelner Erkennungsteilbereiche einerseits und einer Eingrenzung des Erkennungsbereichs auf den Bereich der Fahrspur andererseits, wird die Menge der auszuwertenden Daten erheblich reduziert und somit eine schnelle Verarbeitung der Daten bei der Umgebungserfassung möglich.

In einer gewinnbringenden Ausführungsform der Erfindung, erfolgt die Eingrenzung des Erkennungsbereichs derart, dass zur Fahrspurbegrenzung zusätzlich ein weiterer vordefinierter Toleranzbereich hinzukommt. Somit ist es möglich, die Erkennung nicht nur auf die Fahrspur einzuschränken, sondern zusätzlich für die einzelnen Erkennungsteilbereiche eine Auswertung in den neben der Fahrspur liegenden Toleranzbereichen durchzuführen. Damit können sich am Straßenrand befindliche Objekte, wie Verkehrszeichen, Personen, etc. innerhalb von Erkennungsteilbereichen erfasst und somit spezifisch auf die einzelnen Teilbereiche bezogen ausgewertet werden. Der Toleranzbereich kann in die Bilder der Umgebungserfassung eingezeichnet werden.

Die Objekterkennung kann durch die Bildverarbeitung beispielsweise dergestalt erfolgen, dass diese die Umgebungsdaten auf einem Display zur Bewertung durch eine Person darstellt. Alternativ bietet es sich für eine automatische Auswertung an, eine rechnergestützte Erkennung durchzuführen. Zur automatischen Objekterkennung eignen sich insbesondere auf Methoden der Sensordatenverarbeitung basierende Verfahren. Umfasst der Umgebungssensor beispielsweise eine Kamera, eignen sich in vorteilhafter Weise Bildverarbeitungsmethoden zur Verarbeitung der Umgebungsdaten. Zu diesem Zweck gibt es bereits eine Vielzahl an Methoden, welche aus dem Stand der Technik bekannt sind, wie beispielsweise Template-Matching, Kanten- oder konturbasierte Verfahren. Das Erfindungsgemäße Verfahren ist im Zusammenhang mit Bildverarbeitungsmethoden besonders vorteilhaft, da die in den unterschiedlichen Erkennungsteilbereichen auftretenden Objektgrößen im Voraus gut abschätzbar sind. Bildverarbeitungsalgorithmen können so für jeden einzelnen Erkennungsteilbereich optimal adaptiert werden. Beispielsweise ist es bei der Verwendung eines Template-Matching Verfahrens möglich, innerhalb eines Erkennungsteilbereichs mit einer geringen Anzahl an Templates zu arbeiten, wobei in etwa dieselben Objektgrößen und Objekttypen präsentiert werden. Durch die Verwendung einer geringen Anzahl an Templates, wird das Verfahren entsprechend schnell abgearbeitet.

Auch ist es denkbar, zur Auswertung im Erkennungsbereich eine Objektklassifikation durchzuführen. Wobei die Objektklassifikation alleine oder zusätzlich in Kombination mit anderen Verfahren eingesetzt werden kann, vorwiegend um Fehlalarme zu minimieren. Insbesondere bei den Klassifikationsverfahren, welche auf dem Lernen aus Beispielen beruhen, können für unterschiedliche Erkennungsteilbereiche unterschiedliche Klassifikatoren adaptiert werden. Zur Adaption der Klassifikatoren werden für unterschiedliche Erkennungsteilbereiche unterschiedliche Lernstichproben generiert. Dabei umfasst eine Lernstichprobe für einen Erkennungsteilbereich nur solche Muster, deren Objekttyp auch tatsächlich innerhalb des Erkennungsteilbereichs auftauchen kann. Beispielsweise tauchen Verkehrszeichen nicht innerhalb der Fahrspur, sondern am Fahrspurrand auf. Auch lässt sich die Skalierung für ein Muster einer Lernstichprobe innerhalb eines Erkennungsteilbereichs gut vorhersagen, so dass die Anzahl der Muster gering sein kann.

Beispielsweise kann aufgrund einer Klassifikation ein mittels Bildverarbeitung detektiertes Objekt dahingehend überprüft werden, ob es sich dabei tatsächlich um ein Hindernis handelt oder um ein anderes Objekt das üblicherweise innerhalb einer Verkehrsszene auftauchen kann und keine Gefahr darstellt, z.B. entgegenkommender Verkehr.

In einer weiteren vorteilhaften Ausgestaltung der Erfindung wird der Abstand zu den mittels Bildverarbeitungsmethoden oder Klassifikationsverfahren erkannten Objekten ermittelt. Der Fahrer kann dadurch beispielsweise rechtzeitig vor Gefahren oder Hindernissen gewarnt werden. Wobei der Abstand zu Objekten mittels einem Entfernungsmessenden Sensor gemessen werden kann, z.B. mit einem Laser- oder Radarsensor. Der Abstand zu Objekten kann aber auch anhand der Bilddaten der Umgebungserfassung ermittelt werden. Auch ist es denkbar den Abstand anhand der Zuordnung eines erkannten Objekts zu einem Erkennungsteilbereich zu ermitteln.

Für die Objektdetektion kann eine Kombination aus abstands- und geschwindigkeitsmessenden.sowie klassifizierender Verfahren eingesetzt werden. Durch den Einsatz von Tracking-Verfahren ist eine Auswertung im Erkennungsbereich dergestalt möglich, dass sowohl die Bewegungsrichtung als auch die Bewegungsgeschwindigkeit von Objekten erfasst werden kann. Insbesondere kommen dabei solche Verfahren zum Einsatz, mit denen Unterschiede in der Querbewegung gut erkannt werden. Beispielsweise können dem Fahrer plötzlich auftauchende Hindernisse oder ausscherende Fahrzeuge angezeigt werden. In besonders vorteilhafter Weise kann das erfindungsgemäße Verfahren im Zusammenhang mit einem Sicherheitssystem in einem Straßenfahrzeug eingesetzt werden, um auf andere Fahrzeug-interne Systeme einzuwirken. Beispielsweise können zur Kollisionsvermeidung Steuersignale an die Steuereinheit einer ACC-Anwendung übertragen werden. Auch können Signale an Sicherheitseinrichtungen übertragen werden, beispielsweise um den Airbag vorzuaktivieren.

Im Folgenden wird ein Ausführungsbeispiel der Erfindung anhand einer Figur im Detail erläutert.

Beispielhaft zeigt die Figur eine Verkehrsszene unter Verwendung des erfindungsgemäßen Verfahren, zur Erfassung der vorausliegenden Umgebung eines Straßenfahrzeugs (1) mittels eines Umgebungserfassungssystems. Wobei sich das Straßenfahrzeug auf einer Straße mit mehreren Fahrspuren (2) befindet. Die Begrenzungen (6) des Abbildungsbereichs der umgebungserfassenden Kamera ragen über die Fahrspurbegrenzungen (3) hinaus. Der Erkennungsbereich des Systems soll hierbei nur einen Teilbereich des von der Kamera abbildbaren Bereich umfassen. Der Erkennungsbereich soll zudem in mehrere Teilbereiche (A...D) eingeteilt werden, um die Umgebungsdaten einer mehrstufigen Auswertung zu unterziehen. Der Erkennungsbereich wird in diesem Beispiel auf den Bereich eingeschränkt, welcher sich innerhalb der Fahrspurbegrenzungen (3) befindet. Zusätzlich kommt zum Erkennungsbereich ein weiterer Toleranzbereich (5) hinzu, um beispielsweise in diesem Bereich eine verkehrszeichenerkennung durchzuführen. Wird der Mittelstreifen (4) mit berücksichtigt, entstehen beispielsweise bei zwei Fahrspuren (2) wie in der Figur gezeigt bis zu vier Erkennungsteilbereiche (C1 ... C4) nebeneinander. Entsprechend ist es denkbar, dass die Anzahl der nebeneinanderliegenden Erkennungsteilbereiche mit der Anzahl der Fahrspuren (2) zunimmt.

### Bezugszeichenliste

- 1: Straßenfahrzeug mit einem Umgebungserfassungssystem
- 2: Fahrspur
- 3: Fahrspurbegrenzung
- 4: Mittelstreifen
- 5: Toleranzbereich
- 6: Begrenzung des Abbildungsbereichs der Kamera

- A1 ... D4: Erkennungsteilbereiche

## Patentansprüche

1. Verfahren zur Erfassung der vorausliegenden Umgebung eines Straßenfahrzeugs mittels eines Umgebungserfassungssystems, insbesondere eines Infrarot-Nachtsichtsystems,
bei dem die Erfassung der Umgebungsdaten mittels eines Umgebungssensors erfolgt,
und mittels Sensordatenverarbeitung Objekte innerhalb den von dem Umgebungssensor erfassten Umgebungsdaten erkannt werden,
wobei der Erkennungsbereich, in welchem die Objekte erkannt werden einem Teilbereich des von dem Umgebungssensor erfassten Bereichs entspricht,
und wobei der Erkennungsbereich in mehrere Teilbereiche unterteilt ist, in einem Teilbereich eine Auswertung stattfindet und in einem anderen Teilbereich keine Auswertung stattfindet,
**dadurch gekennzeichnet ,**
**dass** die Umgebungsdaten einer mehrstufigen Auswertung unterzogen werden,
wobei vor der Unterteilung des Erkennungsbereichs in mehrere Teilbereiche im Erkennungsbereich zunächst eine . Fahrspur festgelegt wird, um nachträglich den Erkennungsbereich auf die Fahrspur einzugrenzen und wobei jeder dieser Teilbereiche einer spezifischen Auswertung unterzogen wird.

2. Verfahren nach Anspruch 1,
**dadurch gekennzeichnet ,**
**dass** die Fahrspur festgelegt wird, indem entweder mittels Methoden der Bildverarbeitung eine Fahrspurerkennung durchgeführt wird,
oder mittels der Daten eines Navigationssystems eine Fahrspur festgelegt wird.

3. Verfahren nach einem der vorhergehenden Ansprüche
**dadurch gekennzeichnet ,**
**dass** die Eingrenzung des Erkennungsbereichs derart erfolgt, dass zur Fahrspurbegrenzung zusätzlich ein weiterer vordefinierter Toleranzbereich hinzukommt.

4. Verfahren nach einem der vorhergehenden Ansprüche,
**dadurch gekennzeichnet ,**
**dass** zur Auswertung im Erkennungsbereich eine Objekterkennung mittels Bildverarbeitungsmethoden durchgeführt wird.

5. Verfahren nach einem der vorhergehenden Ansprüche,
**dadurch gekennzeichnet ,**
**dass** zur Auswertung im Erkennungsbereich eine Objektklassifikation mittels Klassifikationsverfahren durchgeführt wird, um Fehlalarme ausschließen zu können.

6. Verfahren nach einem der Ansprüche 4 oder 5,
**dadurch gekennzeichnet ,**
**dass** zur Auswertung im Erkennungsbereich der Abstand zu erkannten Objekten ermittelt wird, um rechtzeitig über Hindernisse informieren zu können.

7. Verfahren nach einem der vorhergehenden Ansprüche,
**dadurch gekennzeichnet ,**
**dass** zur Auswertung im Erkennungsbereich mittels Trackingverfahren eine Erfassung der Bewegung von Objekten durchgeführt wird, um zu erkennen ob deren Bewegungsrichtung der Eigenbewegung des Fahrzeugs entspricht.

8. Verwendung des Verfahrens nach einem der vorgehenden Ansprüche, als Sicherheitssystem in einem Straßenfahrzeug, insbesondere um auf andere fahrzeug-interne Systeme einzuwirken.

## Claims

1. Method for sensing the surroundings in front of a road vehicle (1) by means of a surroundings sensing system, in particular an infrared night vision system in which the surroundings data is sensed by means of a surroundings sensor, and objects within the surroundings data sensed by the surroundings sensor are detected by processing the sensor data, wherein the perception region (6) in which the objects are detected corresponds to a component-region of the region sensed by the surroundings sensor, and wherein the perception region is divided into a plurality of component-regions, an evaluation takes place in one component-region and no evaluation takes place in another component-region, **characterized in that** the surroundings data is subjected to a multi-stage evaluation, wherein before the perception region is divided into a plurality of component-regions in the perception region a lane (2) is firstly defined in order to subsequently restrict the perception region to the lane, and wherein each of these component-regions is subjected to a specific evaluation.

2. Method according to Claim 1, **characterized in that** the lane is defined **in that** either a lane detection is carried out by image processing methods or a lane is defined by means of the data of a navigation system.

3. Method according to one of the preceding claims, **characterized in that** the perception region is restricted in such a way that, for the purpose of delimiting the lane, a further predefined tolerance region is also added.

4. Method according to one of the preceding claims, **characterized in that**, for the purpose of carrying out evaluation in the perception region, object perception is carried out by means of image processing methods.

5. Method according to one of the preceding claims, **characterized in that**, for the purpose of carrying out evaluation in the perception region, object classification is carried out by means of classification methods in order to rule out false alarms.

6. Method according to one of Claims 4 or 5, **characterized in that**, for the purpose of evaluation in the perception region, the distance from detected objects is determined in order to be able to provide information about obstacles in good time.

7. Method according to one of the preceding claims, **characterized in that**, for the purpose of carrying out evaluation in the perception region by means of tracking methods, the movement of objects is sensed in order to perceive whether their direction of movement corresponds to the vehicle's own movement.

8. Use of the method according one of the preceding claims as a safety system in a road vehicle, in particular for acting on other vehicle-internal systems.

## Revendications

1. Procédé de détection de l'environnement à l'avant d'un véhicule routier (1) au moyen d'un système de détection de l'environnement, en particulier d'un système de vision nocturne infrarouge, dans lequel la détection des données d'environnement s'effectue au moyen d'un capteur d'environnement,
et des objets à l'intérieur des données d'environnement détectées par le capteur d'environnement sont reconnus au moyen d'un traitement de données de capteur,
dans lequel la zone de reconnaissance (6) dans laquelle les objets sont reconnus correspond à une zone partielle de la zone détectée par le capteur d'environnement,
et dans lequel la zone de reconnaissance est divisée en plusieurs zones partielles, une évaluation ayant lieu dans une zone partielle et aucune évaluation n'ayant lieu dans une autre zone partielle,
**caractérisé en ce que**
les données d'environnement sont soumises à une évaluation en plusieurs étapes,
avant la division de la zone de reconnaissance en plusieurs zones partielles, une voie de circulation (2) étant d'abord définie dans la zone de reconnaissance afin de limiter ultérieurement la zone de reconnaissance à la voie de circulation,
et chacune de ces zones partielles étant soumise à une évaluation spécifique.

2. Procédé selon la revendication 1, **caractérisé en ce que** la voie de circulation est définie soit en effectuant au moyen de procédés de traitement d'image une reconnaissance de voie de circulation, soit en définissant une voie de circulation au moyen des données d'un système de navigation.

3. Procédé selon l'une quelconque des revendications précédentes, **caractérisé en ce que** la limitation de la zone de reconnaissance s'effectue de telle sorte que la limitation de voie de circulation est accompagnée de plus d'une autre zone de tolérances prédéfinie.

4. Procédé selon l'une quelconque des revendications précédentes, **caractérisé en ce que** pour l'évaluation, dans la zone de reconnaissance, une reconnaissance d'objet est effectuée au moyen de procédés de traitement d'image.

5. Procédé selon l'une quelconque des revendications précédentes, **caractérisé en ce que** pour l'évaluation, dans la zone de reconnaissance, une classification d'objet est effectuée au moyen de procédés de classification afin de pouvoir exclure des fausses alertes.

6. Procédé selon la revendication 4 ou 5,
**caractérisé en ce que** pour l'évaluation, dans la zone de reconnaissance, la distance par rapport à des objets reconnus est déterminée afin de pouvoir signaler des obstacles en temps voulu.

7. Procédé selon l'une quelconque des revendications précédentes, **caractérisé en ce que** pour l'évaluation, dans la zone de reconnaissance, une détection du mouvement des objets est effectuée au moyen de procédés de suivi afin de reconnaître si leur direction de mouvement correspond au mouvement propre du véhicule.

8. Utilisation du procédé selon l'une quelconque des revendications précédentes comme système de sécurité dans un véhicule routier, en particulier afin d'agir sur d'autres systèmes internes du véhicule.
